Europäisches Patentamt

European Patent Office

Office européen des brevets

(11) Publication number: **0 205 399 B1**

(12) **EUROPEAN PATENT SPECIFICATION**

(45) Date of publication of patent specification: **06.10.93** (51) Int. Cl.⁵: **G01N 27/27**, G01N 27/413

(21) Application number: **86810220.3**

(22) Date of filing: **22.05.86**

(54) **Amperometric cell and method.**

(30) Priority: **10.06.85 US 743155**

(43) Date of publication of application:
**17.12.86 Bulletin 86/51**

(45) Publication of the grant of the patent:
**06.10.93 Bulletin 93/40**

(84) Designated Contracting States:
**BE CH DE FR GB IT LI NL SE**

(56) References cited:
DE-A- 2 851 447          GB-A- 1 127 846
GB-A- 1 558 251          GB-A- 2 000 595
US-A- 3 897 315          US-A- 4 563 249

(73) Proprietor: **ORBISPHERE CORPORATION Wilmington Succursale de Collonge-Bellerive Manoir de Bonvent CH-1245 Collonge-Bellerive(CH)**

(72) Inventor: **Hale, John Martin, Dr.**
**4, chemin de la Rétuelle**
**CH-1252 Meinier(CH)**

(74) Representative: **Ritscher, Thomas, Dr. et al**
**RITSCHER & SEIFERT**
**Patentanwälte VSP**
**Kreuzstrasse 82**
**CH-8032 Zürich (CH)**

Rank Xerox (UK) Business Services
(3. 10/3.6/3.3. 1)

**Description**

This invention relates to a membrane-enclosed amperometric cell (herein: MEAC) for quantitative electrochemical determination of the concentration of an electroactive species of interest (herein: EASI) in an ambient medium. The invention further relates to an improved electroanalytical method.

Electrochemical cells for quantitative electrochemical analysis are well known in the art and generally include a working or sensing electrode having a generally flat and frequently circular sensing area covered by a thin film of a liquid electrolyte that extends into an electrolyte reservoir and is in electrolytic contact with a counter electrode; a flexible polymer membrane that is substantially impermeable to the electrolyte but permeable to the EASI (generally called "semipermeable") extends in a substantially conforming manner over the sensing area of the working electrode as well as the electrolyte film thereon.

For amperometric analytical operation the working electrode of a MEAC is polarized by a constant DC voltage to furnish a current whose steady state magnitude is proportional to the activity of the EASI. MEAC's, their operation, and their use for determination purposes are discussed in U.S. Patents Nos. 2,913,386, 4,096,047, 4,325,797 and in the Monography by Hitchman, Michael L., "Measurement of Dissolved Oxygen", John Wiley & Sons, Inc. and Orbisphere Laboratories, 1978.

While elemental (molecular or $O_2$) oxygen is a preferred EASI, others are of interest here as well and include elements or compounds that are more easily oxidized or reduced in the cell than the electrolyte (solvent and solvate); elemental hydrogen is another preferred EASI if measurement is made in line with the method disclosed in U.S. Patent 4,563,249. The ambient medium may be gaseous or liquid and will generally contain the EASI in an essentially pure form or in an admixed or dissolved state, the EASI concentration varying between 100 % and parts per million (ppm) or parts per billion (ppb).

Depending upon whether the EASI are of the electro-reducible type, such as oxygen, or of the electro-oxidizable type, such as hydrogen, the sensing or working electrode of the MEAC will be the cathode or the anode, respectively, while the counter electrode will be the complementing electrode. Suitable insulator means, i.e. non-metallic, inorganic or organic solids, are provided between the electrodes so that any current which is permitted to pass from the sensing electrode to the counter electrode is a ionic current in the electrolyte arising from electrochemical phenomena at the electrolyte-exposed electrodes.

For operation of a MEAC the semipermeable membrane will be secured on the cell after the electrolyte-receiving portion including the sensing area of the working electrode is provided with the electrolyte which may be exchanged together with the membrane for maintenance.

That portion of the EASI-exposed surface of the membrane in operative position and separating the ambient medium from the electrolyte is also called the "sensing face" of the MEAC; frequently, the sensing face will be a transverse and generally circular front face of an elongated tubular housing or jacket onto which the membrane is fastened. Normally, the housing or jacket material will be substantially impermeable to the EASI and the electrolyte-backed membrane portion should be the only part of the MEAC where the EASI can get into the electrolyte film or layer on top of the sensing area of the working electrode.

It will be appreciated that the electrolyte-covered and membrane-covered "sensing area" of the working electrode will generally be an essential and frequently central but not necessarily predominant portion of the membrane-covered "sensing face" of the MEAC.

When measuring the concentration of an EASI in a fluid medium that contacts the sensing face of the MEAC, the desired current contribution normally originates but from diffusion of the EASI through the membrane onto the sensing area of the working electrode and the ensueing electrochemical reaction on the working electrode. In practice, however, additional and undesirable current contributions (i.e. unrelated to the concentration of the electroactive species of interest in the medium) are observed and limit both accuracy and sensitivity of the measuring system, aside from causing problems of stabilization of the transient signal, stability of the steady state signal, undesired noise signals, and prolonged response time.

One type of undesirable current contributions is that caused by electrolyte penetration into the interface between the working electrode and the adjacent insulator portion as set forth in the above cited U.S. Patent 4,096,047 and disclosing means to avoid such penetration by pressure sealing instead of conventional cementing. Other undesirable current contributions are due to general diffusion and leakage phenomena.

For example, EASI may penetrate into the electrolyte remote from the sensing area of the electrolyte, e.g. via the membrane/housing junction, a housing/electrode junction, an electrode/insulator junction, etc. These EASI constitute an "impurity" in the system and tend to diffuse "laterally" from the electrolyte space or reservoir into the electrolyte film on top of the sensing area of the working electrode where they will react and cause a current not related to the concentration of EASI in the ambient medium that is in contact with the membrane surface directly adjacent the sensing area of the electrode. EASI diffusion or leakage into electrolyte portions other than the electrolyte film on the sensing area of the working electrode and

EP 0 205 399 B1

subsequent lateral diffusion into said film would thus be the primary cause of these undesired current contributions. However, when attempting, for example, an extension of amperometric oxygen detection from the ppm ($10^{-6}$) into the ppb ($10^{-9}$) range it is apparent that there may be a limit to materials and structures that would be required for complete elimination of EASI leakage.

The most effective prior art method for avoiding undesired current contribution caused by EASI leakage or undesired diffusion is to provide a third electrode commonly called a "guard" as disclosed, for example, in German Patent 2,851,447 and acting as an electric barrier against lateral diffusion of EASI onto the working electrode as explained below.

GB - A - 1,127,846 discloses an electrochemical cell having a scavenger which may be operated in the manner of an additional electrode and functions in the manner of an electrical guard as mentioned above. Further, the cell may be provided with a plastics housing including a cap with a central opening to permit access of EASI to the membrane in an area that is substantially greater than the sensing area.

US - A - 3,575,836 discloses a physical (in the sense of bodily rather than electrochemical) barrier or mask in the form of an intermediate polymer film between the semipermeable membrane and the sensing electrode. The intermediate film is selected to have a low permeability for the EASI and has an opening that is either larger or smaller than the sensing electrode.

Accordingly, the concept of a physical permeation barrier disclosed in US - A - 3,575,836 is concerned with an internal mask (barrier is between the semipermeable membrane and the electrode) rather than an external mask (barrier is between the environment and the semipermeable membrane), and does not disclose, nor render obvious, a specific minimum overlap of the mask beyond the periphery of the sensing area.

Accordingly, it is a primary object of this invention to provide for a MEAC with an improved means against undesired current contribution in the form of a physical barrier that effectively prevents undesirable lateral diffusion of EASI into and through the electrolyte film on top of the sensing electrode and generally provides for shortening of the response time.

According to the invention, this object is achieved by a MEAC as defined in the preamble and the characterizing features of claim 1; preferred MEACs have the features of claims 2-6.

A further object of the invention is an improved quantitative electroanalytical determination of EASI, both of the electro-reducible type, such as oxygen, as well as of the electro-oxidizable type, such as hydrogen. This object is achieved by a method as defined in the preamble and the characterizing features of claims 6 and 7.

Generally, a MEAC according to the invention comprises the following features (A), (B) and (C):

(A) A working or sensing electrode having a sensing area typically consisting of a noble metal, such as gold or platinum and alloys thereof, as well as stainless steel and other oxidation-resistant metals; the working electrode will be the cathode when measuring electro-reducible EASI, such as oxygen, or the anode when measuring electro-oxidizable EASI, such as hydrogen; preferably, the sensing area of the working electrode is generally flat, e.g. substantially planar or spherical with a large diameter of curvature of typically 50 mm; the sensing area is defined by its periphery which substantially circumscribes a circle. For many purposes it is preferred that the surface of the sensing electrode is smooth, e.g. polished to mirror brightness, as defined in the above mentioned U.S. Patent 4,563,249. The size of the sensing area can vary as needed and is typically in the range of from about 5 to 100 mm$^2$.

Further, it will be preferred for many purposes that the sensing area of the working electrode is coaxial and concentric with a generally longitudinal and overall cylindrical cell structure, the electrode sensing area and the sensing face of the cell then being part of a "front face" arranged transversely to the longitudinal axis of the overall cell structure. For brevity and clear distinction, the sensing area of the working electrode will also be referred to herein as "sensing area (A)".

(B) A film of a liquid electrolyte in substantially uniform thickness of typically between about 5 and 50 $\mu$m (0.2-2 mil) covering the sensing area of the working electrode is in electrolytic contact, generally via an electrolyte space or reservoir, with a counter electrode which, in general, is "consumable" and will be oxidized or reduced depending upon the reaction at the sensing electrode and the corresponding counter reaction.

Counter electrodes made of silver and/or silver oxide are but typical examples.

(C) A flexible polymer membrane having a generally uniform thickness of typically in the range of from 10 to 300 $\mu$m (0.5 to 12 mil) or more and being substantially impermeable to the electrolyte but permeable to the EASI is provided to extend in a generally conforming manner over the sensing area of the working electrode and the electrolyte film thereon.

Normally, the electrolyte film on the sensing area will be shaped by the flexible membrane when the cell end is provided with a slight excess of electrolyte and the membrane is layed upon the electrolyte

3

EP 0 205 399 B1

and pressed (conformingly) onto the cell end; then, the membrane is normally secured to the cell housing by conventional means, e.g. O-rings or, preferably, by a dye-ring as disclosed in U.S. Patent 4,372,021.

Many examples of suitable materials for flexible polymer membranes are disclosed in the above cited patents; a representative example of a flexible polymer membrane for oxygen measurement is PTFE (polytetrafluoroethylene) with a thickness of from 10 to 50 $\mu$m; for hydrogen measurement a representative example of a suitable membrane is PVDC (polyvinylidene chloride).

Membrane thickness may be a means to control cell operation as explained in the above mentioned U.S. Patent 4,563,249 or may be caused by a compromise between quick response and mechanical strength.

The MEAC includes, as a further critical feature (D), a physical (i.e. bodily or mechanical) permeation barrier that satisfies the following essential requirements:

(D-1) It consists of a layer (also termed "barrier layer" herein) of a substantially inert (as regards the ambient medium, the electrolyte, and the operating conditions) solid material that is substantially impermeable not only to the liquid electrolyte but also to the EASI; specific examples of suitable materials for the barrier layer will be given below but it should be understood that the term "substantially impermeable to the EASI" may depend upon the nature of the EASI and the thickness of the barrier layer since, for example, elemental hydrogen will permeate through such materials as metal sheeting so that the criterion "substantial impermeability to EASI" is best expressed in relation to the permeability of the semi-permeable membrane of the MEAC when tested under the same conditions (thickness, temperature, pressure, etc.); hence, the barrier layer must in any case be substantially less permeable to the EASI than the semi-permeable membrane when measured under identical conditions, typically by a factor of at least 10 and generally by a factor of at least 100 or more. For example, the semi-permeable membrane must permit permeation of the EASI at a rate that is at least ten times and generally at least a hundred times greater than the corresponding rate of permeation of the EASI through the barrier layer.

(D-2) Further, the barrier layer must extend between said ambient medium and the membrane, and

(D-3) be disposed in a substantially parallel configuration with the semi-permeable membrane and be in physical contact with that membrane.

Generally, the mutually contacting surfaces of the barrier layer and the semipermeable membrane will be in a "sealing engagement" meaning that a continuous layer of a liquid would not form at the interface.

Such sealing engagement between the membrane and the barrier layer may be obtained by continuous pressure, by means of an adhesive, or by adhesion, depending upon the surface qualities of the membrane and the barrier layer; generally, such sealing engagement will not present a problem because most polymer membranes for use with MEAC's will exhibit surface sealing qualities even at low specific contact pressures.

For example, a typical barrier layer suitable for use with all types of EASI is an essentially flat metal sheet (typical gauge of 50-2000 $\mu$m) made of stainless steel and maintained in pressing engagement with the flexible polymer membrane by means of a clamp, bracket or the like. Such clamp-induced pressure of the steel sheet barrier layer against the membrane covering an essentially flat electrode sensing area will normally be sufficient for a sealing engagement of barrier and membrane in line with criterion (D-3).

(D-4) The barrier layer has at least one opening that permits access of the EASI through membrane (C) to sensing area (A) while physically (i.e. bodily or mechanically) restricting such access to a limited portion of the sensing area as specified below.

According to the invention the barrier layer extends inwardly (i.e. toward the center) beyond the perphery of the sensing area so as to form a circumjacent margin of overlap (also termed "margin D-5").

For reasons explained in more detail below, the minimum width of margin (D-5) will be:

at least three times greater than the thickness of membrane (C).

In other words, margin (D-5) can be said to be a closed stratiform "annulus" of electrolyte film situated "below", i.e. immediately adjacent a membrane portion which, in turn, is covered or "masked" by the barrier layer and on top of sensing area (A).

When using a barrier layer (D-1) with but a single opening (D-4) the periphery or edge of such opening may coincide in the sense explained above (i.e. projected onto sensing area (A)) with the inner periphery (b) of margin (D-5), or might be smaller but in no case must extend into the minimum width area of margin (D-5).

4

When, on the other hand, using a barrier layer (D-1) with a plurality (two, three or more) openings (D-4), the periphery or edge of any such opening must not extend into the minimum width area of margin (D-5). Preferably, the margin surrounding each opening should also have a minimum width satisfying the same criteria as margin (D-5).

For example, with the circular periphery of sensing area (A) the outer periphery (a) of margin (D-5) will, of course, be circular as well, and the required minimum width of margin (D-5) will most simply be obtained when the inner periphery (b) of margin (D-5) is circular as well, is coaxial or concentric with (D-5a), and is distanced from the latter by the minimum width or distance required by the minimum width requirement; now, as long as the at least one opening is situated within the inner periphery (b) of margin (D-5), any EASI that permeates through the unmasked portion of membrane (C) on top of area (A) would have to migrate through the electrolyte film within circumjacent margin (D-5) before reaching the periphery of sensing area (A); the minimum length of this migration path is the width (D-5c) and the latter, in turn, has the minimum value defined above. Now, since this migration path still extends through electrolyte film on top of sensing area (A) - i.e. in its "masked" portion - EASI react with the adjacent portion of the sensing electrode; the probability of such reaction increases with the length of the masked migration path and the minimum width requirement are such that the probability of reaction is approaching unity.

Assuming, as an example, a circular sensing area (A), a circular and concentric inner periphery (D-5b), a typical film thickness of about 10 $\mu$m and a typical membrane thickness of 20 $\mu$m, the barrier would require a minimum margin width of 60 $\mu$m.

Accordingly, a barrier layer (D-1) having a single circular and concentric opening with an inner diameter that is about 150 $\mu$m smaller than the diameter of sensing area (A) will provide an effective physical permeation barrier according to the invention preventing that any EASI that has passed through membrane (C) within the unmasked portion adjacent sensing area (A) will be prevented from lateral diffusion beyond the periphery of the sensing area.

Obviously, EASI could still reach electrolyte portions remote from the electrolyte film on top of sensing area (A), i.e. because the membrane-covered sensing face of the cell is greater than the sensing area (A) of the working electrode or/and if EASI could diffuse or permeate through the cell jacket.

Generally, it is assumed to be sufficient that the path of the EASI from the ambient medium or sample around the outside of the barrier layer to the sensing electrode should be long in comparison with the direct path from the sample through the membrane to the sensing electrode. However, according to a preferred embodiment of the MEAC according to the invention, the barrier layer will extend over the entire sensing face in physical contact with the membrane, on the one hand, and will be sealingly connected with the cell-supporting jacket, on the other hand. The jacket, in turn, will preferably be made of a material that is substantially impermeable to the EASI and is constructed free of joints that would permit diffusion of EASI.

Further, while the MEAC of the invention does not normally require a guard electrode, use of such an additional electrode may be desirable and is encompassed by the invention for specific uses where an additional safeguard against lateral diffusion from the electrolyte space adjacent the film or sensing area into that film is desired.

The invention will be explained with reference to the annexed drawings in which:

Fig. 1    is a diagrammatic sectional view of a prior art MEAC having an additional electrode functioning as an electric guard against unwanted contributions to the measuring current;

Fig. 2    is a diagrammatic sectional view of a MEAC having an external barrier layer in accordance with a first general embodiment of the invention;

Fig. 3    is an enlarged view of the sensing area portion of the inventive MEAC shown in Fig. 2;

Fig. 4    is a diagrammatic top view of the sensing surface of the inventive MEAC shown in Fig. 2, and

Fig. 5    is a diagrammatic top view illustrating various embodiments of openings in a barrier layer of a MEAC according to the invention.

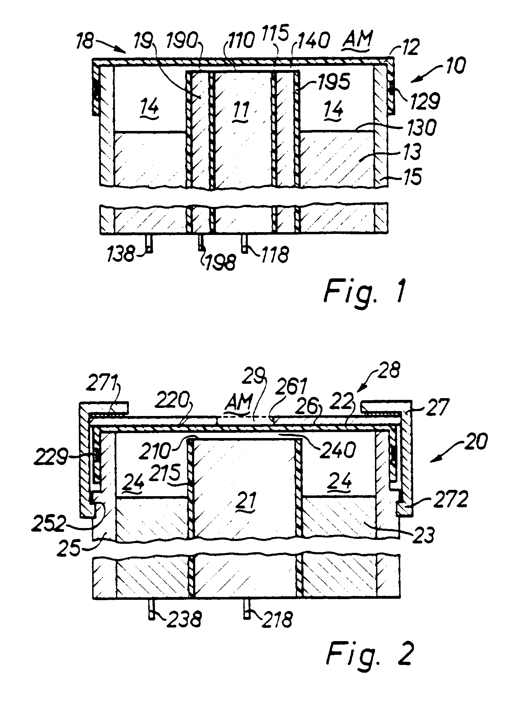

Describing now the drawings, Figure 1 shows a prior art MEAC of the type disclosed in German Patent 2,851,447 in a diagrammatic and partially broken-away sectional view.

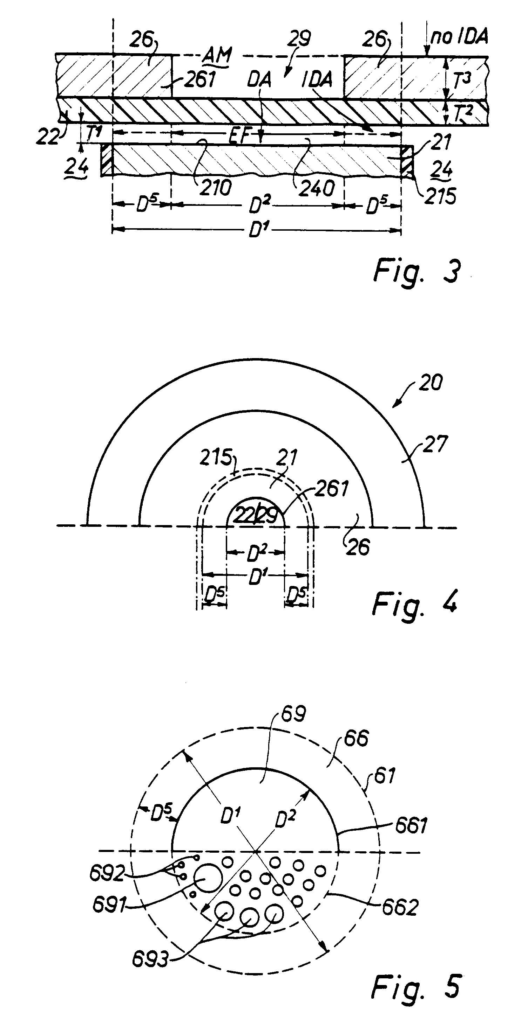

MEAC 10 has a generally cylindrical and elongated body (only upper and lower end shown) that includes, in a generally coaxial form, a centrally arranged working electrode 11 having an electrolyte-exposed surface 110, a tubular guard electrode 19 having an electrolyte-exposed surface 190, and a counter electrode 13 having an electrolyte-exposed surface 130; insulating layers 115, 195 are arranged between adjacent surfaces of electrodes 11, 19, 13 and leads 118, 198, 138 are arranged for electrical connection of each electrode with a measuring circuit (not shown). It is to be noted that the presentation of Fig. 1 (and of Fig. 2 and 3) is diagrammatic and should by no means imply that each electrode is a massive body nor that it extends through the entire probe body; in actual practice, the electrode surfaces 110, 130 and 190 in contact with electrolyte 14, and notably the surfaces 110, 190, are essential but neither sensing electrode 11 nor guard 19 need to have a substantial mass; for analytical operation, the surface area of a sensing electrode should generally remain as constant as possible and should neither decrease, e.g. due to deposits, nor increase, e.g. due to diffusion of electrolyte into the interface between electrode 11 and the adjacent insulator layer 115 separating that electrode from the adjacent electrode which in Fig. 1 is the guard electrode 19 but could be the counter electrode 23 or 33 as in Fig. 2 and 3.

The counter electrode 13 of Fig. 1 is, in turn, electrically insulated against the guard electrode 19 by insulating layer 195. An EASI-impermeable jacket 15 of an insulating material or made of an electrically conducting material but provided with an additional insulator (not shown) agagainst counter electrode 13 defines the probe or cell body that maintains the sensing surface 18 of cell 10 exposed to a sample of interest containing the EASI. A holding means 129, e.g. a dye-ring as disclosed in U.S. Patent 4,325,797, is used to sealingly connect semi-permeable membrane 12 with jacket 15 and to retain a liquid and generally aqueous (acid, alkaline or neutral, optionally buffered) electrolyte 14 in contact with surface 130 of counter electrode 13 and extending as a thin liquid film 140 typically having a thickness of from 5 to 20 $\mu$m through the area defined by the inner surface of membrane 12 and the adjacent surfaces 110, 190 of the sensing electrode 11 and guard 19.

The EASI may penetrate through membrane 12 into electrolyte film 140 but also into electrolyte 14 on top of counter electrode 13. However, because guard electrode 19 is maintained substantially at the same potential as working electrode 11, any EASI that has permeated or diffused into a portion of electrolyte 14 that is not the thin film layer 40 cannot diffuse "laterally" into electrolyte film 140 on top of working electrode surface 110 because prior to arriving there it would be "captured" by guard electrode surface 190, if the electrolyte film 140 on top of surface 190 has a suitable thickness/length ratio as defined in the above mentioned German Patent.

Accordingly, it will be understood that guard electrode surface 190 and the electrolyte film covering that surface act as an electric guard or barrier which protects the sensing surface 110 against EASI that could reach it but by lateral diffusion through electrolyte film 140, i.e. in a radial direction.

When using MEACs with an electric guard or barrier as just explained for hydrogen determination as disclosed in U.S. Patent 4,563,249 it was observed that the insulator 115 between working electrode 11 and guard 19 may become an undesirable reservoir for EASI which if soluble in the insulator material may accumulate therein. When operating in a steady state this EASI reservoir may not become apparent; however, upon a step change of EASI concentration in the sample adjacent the sensing face of MEACs it will take an appreciable period of time for the EASI reservoir in insulator 115 to become depleted (thus generating a decaying residual current), or filled up to capacity (thus generating a slowly increasing contribution to the total current) and in either case delaying appearance of the genuine signal.

Surprisingly, it has been found according to the invention that a simple "physical" or mechanical barrier arranged between the sample and the sensing area of the working electrode will avoid this disadvantage of prior art MEACs with a guard electrode and provide additional advantages including simplified structure and operation, as well as additional benefits, such as avoiding diffusion of gaseous or liquid components not related to the EASI from the MEAC into the ambient medium or vice-versa, and avoidance of measurement errors due to concentration polarization or local depletion of EASI in the sample of the type typically avoidable but by agitation of the ambient medium.

According to the invention, the permeation barrier 26 of MEAC 20 will be arranged between the ambient medium AM (or sample) and the semi-permeable membrane 22 to provide an "external" barrier or "mask".

Preferably, the overall construction of MEAC 20 is cylindrical and the working electrode 21 is coaxial with jacket 25 which is substantially impermeable to EASI; the sensing face 28, i.e. a preferably circular front face of MEAC 20, is covered by membrane 22 which is sealingly connected with jacket 25 by means of a holding ring 229 in the manner discussed above.

According to the invention MEAC 20 is provided with a physical permeation barrier in the form of a circular layer 26 made of a substantially inert solid material, e.g. stainless steel or another inorganic or organic material which at a thickness of typically in the range of from about 50 $\mu$m to about 2000 $\mu$m will be substantially impermeable to diffusion of the EASI.

Stainless steel and similar metal barrier layers are preferred because they will be substantially impermeable to all EASI of practical interest including hydrogen when used at a layer thickness within the 50 to 2000 $\mu$m range. Generally, barrier layer 26 is disposed in a substantially parallel configuration with membrane 22 and is in physical, i.e. bodily surface contact with the latter; a thickness of 0.1 to 0.3 mm is preferred.

To achieve or maintain such contact, a generally circular bracket member 27 of an inert material, such as a metal, e.g. stainless steel, bronze, or a ceramic material, a polymer material optionally reinforced, mineral glass, or the like, may be used to hold layer 26 in contact with membrane 22.

A sealing ring 271 may be arranged between bracket 27 and barrier layer 26, and a clamp portion 272, thread, or the like securing element is provided at the lower end of bracket 27 to engage with a matching recess 252, thread, ring or the like retaining member of jacket 25.

When using a metal disc or the like rigid material for layer 26 it is preferred that the upper surface 220 of membrane 22 acts as a seal so that the pressure exerted by bracket 27 upon barrier layer 26 presses the latter onto membrane 22 to prevent that the probe medium containing the EASI penetrates into the barrier/membrane interface. Further, it is preferred for may purposes of MEAC 20 that barrier 26 be also in sealing engagement with jacket 25.

The sensing area (A) of working electrode 21 in the general embodiment of Fig. 2 is the electrode surface 210 defined, for example, by an insulator 215 that provides for electrical separation of working electrode 21 and counter electrode 23; preferably, the electrode/insulator assemblies are made in accordance with U.S. Patent 4,096,047 (valve/valve seat structures). Leads 218, 238 serve to connect the respective electrodes 21, 23 with the measuring circuit (not shown).

A thin film 240 of liquid, e.g. aqueous, electrolyte covers the sensing area 210 and is in electrolytic contact with the counter electrode 23 because film 240 is in contact with the main electrolyte body 24 of the electrolyte reservoir. Generally, the thickness of electrolyte film 240 will be determined by the cell components that form the bodily structure of sensing face 28, and by membrane 22. Normally, such thickness will be in the range between 1 and 20 $\mu$m and can be measured by conventional means such as a light-splitting microscope. Barrier layer 26 is provided with a single circular opening arranged concentrically with the sensing area 210 of the working electrode.

In order to ascertain electrolyte contact between electrolyte film 240 and electrolyte main body 24, the inner edge 261 of layer 26 should not partition the inner circular area of electrolyte film 240 from the adjacent annular peripheral electrolyte film area that is covered by barrier layer 26; typically, the contact pressure exerted by edge 261 onto membrane 22 should not exceed an upper limit of about 3 bar; the lower pressure limit is not critical as long as diffusion of EASI into the membrane/barrier interface of the MEAC having an external barrier or mask is prevented. Another means to prevent such diffusion is to provide an intermediate layer of an adhesive material at the interface.

Barrier layer 26 may be made, of course, from other materials than the normally preferred stainless steel; metals are frequently preferred but other inorganic as well as organic materials providing a sufficient degree of impermeability to the EASI and being substantially inert under the conditions of their use in the MEAC are suitable including composite materials, such as gold-coated steel or polymer-coated metal.

With an external barrier it is important that the interface of barrier layer 26 and membrane surface 220 is sealed against diffusion of EASI into that interface; while a pressure sealing engagement of a metal layer 26 with polymer membrane 22 is preferred, sealingly effective intermediary layers formed of an adhesive, e.g. an epoxy resin, or another diffusion-blocking material, may be used in addition to, or instead of, the pressure seal.

Further, while barrier layer 26 in the form of discrete and re-usable components of inventive MEACs are preferred, barrier layers may be obtained by electro-deposition, vacuumdeposition or equivalent methods of applying inert material or metal, e.g. a noble metal or nickel, onto a polymer or equivalent substrate that may be, but need not be, the semipermeable membrane of the MEAC.

Dimension, shape, function and number of the at least one opening (D-4) will be explained in connection with Fig. 4 to 6, it being noted, however, that while only a single opening is shown in Fig. 2 and 3 such single opening might be replaced by a plurality of smaller or even minute openings distributed in a preferably uniform manner within the area occupied by the openings 29 or 39 in Fig. 2 and 3.

According to a preferred embodiment the inventive MEAC is provided with an external barrier formed by a circular sheet or disc 26 of an inert metal with a concentric opening defined by an edge 261; further, the outer periphery of disc 26 is sealingly connected with cell jacket 25, and edge 261 is sealingly connected with membrane 20; then, the entire cell 20 will be effectively shielded against EASI except at the sensing electrode portion beneath the opening.

When using a polymer material for the barrier layer 26, various materials may be used and the following Table I is given to show permeabilities of some non-limiting examples of polymers for use in a barrier layer (D-1) according to the invention.

TABLE I

| Permeability (n mole$\cdot\mu$m$\cdot$m$^{-2}\cdot$Pa$^{-1}\cdot$sec$^{-1}$) | | | |
|---|---|---|---|
| Material | $H_2$ | $O_2$ | $CO_2$ |
| PVDC )[1] | 0.069 | 0.002 | (not measured) |
| PVF )[2] | 0.1 | 0.0065 | 0.022 |
| E-CTFE )[3] | 0.15 | 0.05 | 0.22 |
| PETP )[4] | 0.16 | 0.022 | 0.025 |
| PVC )[5] | 0.36 | 0.01 | 0.04 |
| ETFE )[6] | 1.5 | 0.2 | 0.5 |
| FEP )[7] | 4 | 1.5 | 3.4 |
| PFA )[8] | 5.6 | 2.2 | (not measured) |

)[1] polyvinylidene chloride (e.g. SARAN, reg. trademark)
)[2] polyvinyl fluoride (e.g. TEDLAR, reg. trademark)
)[3] copolymer of ethylene and monochloro trifluoro ethylene (e.g. HALAR, reg. trademark)
)[4] polyethylene terephthalate (e.g. MYLAR, reg. trademark)
)[5] polyvinyl chloride (e.g. HOSTALIT, reg. trademark, type "S")
)[6] ethylene tetrafluoro ethylene copolymer (e.g. TEFZEL, reg. trademark)
)[7] fluorinated ethylene/propylene (e.g. TEFLON, trade name)
)[8] polyfluoro alkoxy polymer (e.g. TEFLON, trade name)

Fig. 3 is meant to further illustrate features (D-5) and (D-6) of the inventive MEAC, i.e. arrangement and definition of the circumjacent margin around at least one opening of the barrier layer.

Fig. 3 shows an enlarged portion of Fig. 2; working electrode 21 has a sensing area (A) defined by its electrolyte-exposed circular top surface 210 limited by adjacent insulator 215.

Barrier layer 26 between the ambient medium AM and membrane 22 has a single central opening 29 defined by barrier edge 261. As will be apparent from Fig. 5 (showing MEAC 20 of Fig. 2 in top view), edge 261 circumscribes a circular opening 29 that defines the limited portion of "direct access" to the electrolyte film 240 (double arrow EF; portion in full lines) as distinguished from the mask-covered part or "getter portion" of electrolyte film 240 on top of surface 210 covered by barrier layer 26 (double arrow EF; portion in broken lines); because of the generally preferred embodiment of concentric or coaxial arrangements of a circular sensing area 210 and a circular opening 29, the getter portion of electrolyte film 240 will have an annular shape and a width $D^5 [D^5 = 1/2 (D^1-D^2)]$.

According to the invention, the area of indirect access (IDA; curved arrow) of an EASI from ambient medium AM to the masked annular electrolyte film 240 on top of sensing area 210 has to meet the dimensional requirements of feature (D-6): with an external barrier or mask (as exemplified in Fig. 2 and 4) EASI may permeate "laterally" (i.e. in a generally radial direction towards the end of the getter portion limited by the periphery of sensing area 210) immediately after having passed thickness $T^3$ of barrier layer 26 because membrane 22 is permeable to the EASI; thus, lateral permeation of EASI is possible both within the membrane and the electrolyte layer. Now, according to the invention, the length of the getter area ( = the annular dimension $D^5$) must satisfy criterion (D-6), i.e. the minimum width of the circumjacent margin ( = minimum width $D^5$ of annular getter area) must be at least three times greater than the thickness $T^2$ of membrane 22.

The width requirement of the circumjacent margin is due to a theory developed in the course of arriving at the present invention: in order that the probability that all laterally diffusing EASI are caught by the working electrode in the indirectly accessible or masked getter portion of the sensing area (A) approaches unity, the length of the shortest EASI path through the getter portion must be at least three times greater than a diffusion parameter dependent upon the diffusion rate of an EASI within an electrolyte film adjacent the working electrode surface of a MEAC.

If the radial length of the minimum getter path ( = minimum radial width of circumjacent margin) is sigificantly less than three times the membrane thickness with an external mask, the probability that any laterally diffusing EASI are caught by the electrode in the masked area will be less than unity so that EASI may reach the insulator 215, 315 or the electrolyte reservoir 24, 34. This would give rise to the above discussed measurement errors caused by EASI diffusion into the electrolyte reservoir, or by the "well-function" of the insulator adjacent the working electrode.

On the other hand, there is no theoretical upper limit to the width of the circumjacent margin; practical considerations will, however, stand in the way of overly extending such width.

Returning to Fig. 3, EASI from ambient medium AM have direct access (straight arrow DA) to the "unmasked" central circular portion of electrolyte film 240 only; this area of direct access is circular and has a diameter $D^2$ defined by edge 261 of opening 29. This diameter $D^2$ may, but need not, coincide with the inner periphery (D-5b) of the circumjacent margin (D-5); preferably, inner periphery (D-5b) does not coincide with $D^2$ but is within the masked area $D^5$ to provide for a safety margin to allow, at least, for normal deviations from ideal circularity and concentricity so that the actual length of a radial path through the getter area will be larger, e.g. by at least about 10 %, preferably by at least about 30 %, than the minimum width requirement defined by parameter (D-6) explained above.

Fig. 5 is an enlarged diagrammatic top view to further illustrate the width requirements of the circumjacent margin (D-5) in the preferred circular structure of the sensing area (A) having a barrier layer with a single concentric large opening 69 defined by edge 661 or a plurality of excentric smaller openings 691, 692, 693. The periphery 61 of sensing area (A) is shown in broken line as a circle of diameter $D^1$ and this coincides with the outer periphery (D-5a) of the circumjacent margin; the inner periphery (D-5b) is defined by a circle of diameter $D^2$ which, in the upper half of Fig. 5, coincides with edge 661 (full line) of a single concentric opening 69. In the lower half of Fig. 5, broken line 662 shows the position of the inner periphery (D-5b) that need not be a real line but can be a theoretical limit. The shape and the position of this limit defines the width (D-5c) of the circumjacent margin and any opening (D-4) of the barrier layer 66 must be within the area defined by this limit. While a single concentric opening, e.g. opening 69 or a smaller concentric opening, is preferred for some embodiments of the invention, a multiplicity of small or even many minute openings 692 are preferred for other embodiments: it has been found according to the invention that a barrier layer, notably an internal barrier, having a multiplicity of small holes within the area of direct access (i.e. within circumjacent margin D-5) has the added advantage that it can be used to reduce measuring errors caused by "concentration polarization", i.e. the effects of local depletion of EASI in the ambient medium adjacent the sensing face of the MEAC. Conventionally, these effects are reduced by mechanical stirring.

## EXAMPLES

To illustrate operation of the MEAC according to the invention the following non-limiting examples are given.

### Example I

A commercially available hydrogen sensor (Orbisphere Laboratories, Geneva, Switzerland, Model 2230) having, in principle, the structure illustrated in Fig. 1 and including a platinum-coated circular working electrode (anode) of 6.32 mm diameter was operated in line with the method disclosed in U.S. Patent 4,563,249 for detection of hydrogen as the EASI.

The electrolyte contained 45 g $CdF_2$ and 30 g of concentrated HF per liter of water and the membrane was a PVF membrane of 12.5 $\mu$m thickness.

The detector was transferred from water of room temperature containing dissolved elemental hydrogen at various concentrations (between 6 ppm and 1 ppb) to hydrogen-free water. The applied potential was 0.86 V.

First, measurements were made without a barrier layer; response time in these instances at 25°C were up to 280 minutes for a 90 % change.

Secondly, the measurements were repeated with an external barrier layer 26 according to the invention made of a resiliently flexible flat disc of commercial grade stainless steel having a central opening of 6.0 mm diameter and a thickness of 0.2 mm; layer 26 was held by a bracket 27 of the type shown in Fig. 2 in sealing engagement with the jacket 25; under these conditions the response times at 25°C were substantially improved, i.e. reduced to less than 3 minutes for a 90 % change.

While a reduction of the response time could also be achieved by the electrical guard electrode, the results obtained with the structurally and operationally much simpler barrier layer 26 according to the invention were significantly better.

Further advantages observed with the MEAC comprising a steel sheet as external barrier layer 26 were elimination of loss of water from the electrolyte and of carbon dioxide absorption at prolonged operating periods.

Example II

A MEAC for detection of oxygen as EASI dissolved in water as described in Example 1 of German Patent 2,851,447 (MEAC 10 with guard electrode 19 of the type shown in Fig. 1 herein) was operated as explained in detail in the German Patent, i.e. with an aqueous alkaline electrolyte (KOH in water) and a semi-permeable membrane of FEP and having a thickness of 25.4 $\mu$m (1 mil). The cathode potential with respect to Ag/AgCl anode was minus 800 mV and a current of 1.6 $\mu$A per ppm of dissolved oxygen was observed at the working electrode (cathode) at 25°C. The diameter of the cathode was 6.32 mm.

When the cell was exposed to water free of oxygen, a residual current of about 8 nA flowed through the working electrode when the guard electrode was not operated,but dropped to only about 0.8 nA as soon as the guard electrode was switched on (same potential as working electrode).

When the same MEAC was supplied with the steel disc and brakket described in the above Example I as an external mask sealingly engaged with the semi-permeable membrane and the jacket as illustrated in Fig. 2 of the drawing herein, operation under the same conditions yielded a residual current of less than 0.8 nA regardless of whether or not the guard electrode was operated. In other words, the simple steel disc as a physical barrier had a "mechanical guard effect" that was at least equivalent to that of one of the best electrical guards currently available for oxygen sensors.

Again, the added advantage of prevention of water loss from the electrolyte and absence of carbon dioxide absorption by the electrolyte through the semi-permeable membrane were observed.

Results similar to those described above in Examples I and II for external barrier layers were obtained when the external barrier layer of metal was replaced by an internal barrier layer in the form of a 20 $\mu$m film of PVDC that was substantially impermeable to the EASI in question. When the single central opening of the barrier used in Examples I and II was replaced by a multiplicity of holes (hole diameter about 50 $\mu$m; substantially uniform distribution of holes over the area of the central opening; distance between adjacent holes about 0.8 mm) similar effects as to prevention of lateral EASI diffusion, prevention of loss of water and lack of carbon dioxide absorption were observed. In addition, the MEAC was less sensitive against depletion phenomena,in that substantially the same results were observed regardless of whether the sample solution was stirred or not.

Various modifications of the above disclosed embodiments of the invention will be apparent; for example, barrier layers may not only be combined with the semi-permeable membrane to form barrier/membrane composites but it is within the ambit of the invention to use integral barrier/membrane structures, e.g. in the form of a substantially EASI-impermeable layer that is provided with a limited topical portion where the EASI but not the electrolyte may permeate.

## Claims

1. A membrane-enclosed amperometric cell (20) for use in determining the concentration of an electroactive species of interest in an ambient medium; said cell comprising:

   (A) a working electrode (21) having a sensing area (210) defined by an essentially circular outer periphery;

   (B) a film (240) of a liquid electrolyte covering the sensing area and being in electrolytic contact with a counter electrode (23), the film having a substantially uniform thickness;

   (C) a polymer membrane (22) that is substantially impermeable to the electrolyte but permeable to the electroactive species, the membrane extending in a substantially conforming manner over the sensing area and the electrolyte film thereon, and the membrane having a substantially uniform thickness; and

   (D) a physical permeation barrier

      (D-1) comprising a layer (26) of a substantially inert solid material that is substantially impermeable to the liquid electrolyte and to the electroactive species;

      (D-2) extending between the ambient medium and said membrane;

      (D-3) disposed in a substantially parallel configuration with the membrane and in physical contact therewith;

      (D-4) having at least one opening (29) permitting access of the electroactive species to a limited portion of said membrane,

   characterized in that

   said layer (26) extends inwardly beyond said periphery of said sensing area so as to form a circumjacent margin of overlap having a width that is at least three times greater than the thickness of said electrolyte barrier to prevent lateral diffusion of said electroactive species through said circumjacent margin.

2. The cell of claim 1, wherein the layer (26) is made of a resiliently flexible sheet of a substantially inert metal and wherein a holding means (27) is provided to maintain the metal sheet in sealing engagement with the membrane (22).

3. The cell of claim 1, wherein the layer (26) is a layer of a metal that is substantially inert to cell operating conditions, the layer having a periphery formed by an outer edge of the layer, and an opening (29) defined by an inner edge of the layer, the outer edge of the layer being sealingly connected with a jacket (25) of the cell (20), and the inner edge of the layer (26) being sealingly connected with the membrane (22), the jacket (25) being substantially impermeable to the electroactive species of interest.

4. The cell of any of claims 1 to 3, wherein the at least one opening (29) of the layer (26) is a single opening arranged concentrically with the sensing area (210).

5. The cell of any of claims 1 to 3, wherein the at least one opening (29) of the layer (26) is a multiplicity of openings provided within the circumjacent margin.

6. The cell of any of claims 1 to 5, wherein the working electrode (21) is the anode and wherein the cell (20) is suitable for determination of elemental hydrogen.

7. A method of electroanalytically determining the concentration of an electroactive species of interest in a fluid ambient medium by means of a membrane-enclosed amperometric cell as claimed in any of claims 1-6.

8. The method of claim 7, wherein the electroactive species of interest is elemental hydrogen.

**Patentansprüche**

1. Amperometrische Zelle (20) mit Membranabschluss zur Verwendung für die Bestimmung der Konzentration einer gewählten elektroaktiven Species in einem ambienten Medium, welche Zelle aufweist:
   (A) eine Arbeitselektrode (21) mit einer Spürfläche (210), die von einem im wesentlichen kreisförmigen Aussenumfang begrenzt ist;
   (B) einen Film (240) aus einem flüssigen Elektrolyt, der die Spürfläche bedeckt und sich in elektrolytischem Kontakt mit einer Gegenelektrode (23) befindet, wobei der Film eine im wesentlichen gleichmässige Dicke hat;
   (C) eine Polymermembran (22), die für den Elektrolyt im wesentlichen undurchlässig aber für die elektroaktive Species durchlässig ist, wobei sich die Membran in einer im wesentlichen konformativen Weise über die Spürfläche und den darauf befindlichen Elektrolytfilm erstreckt und die Membran eine im wesentlichen gleichmässige Dicke hat, sowie
   (D) eine physische Permeationssperre, welche
      (D-1) eine Schicht (26) aus einem im wesentlichen festen Material, das für den flüssigen Elektrolyt und die elektroaktive Species praktisch undurchlässig ist, aufweist;
      (D-2) sich zwischen dem ambienten Medium und der Membran erstreckt;
      (D-3) in einer im wesentlichen parallelen Konfiguration zur Membran und in physischem Kontakt mit dieser angeordnet ist;
      (D-4) mindestens eine Oeffnung (29) besitzt, welche der elektroaktiven Species Zugang zu einem begrenzten Teil der Membran bietet,
   dadurch gekennzeichnet, dass sich die Schicht (26) nach innen über den Umfang der Spürfläche erstreckt, so dass ein umlaufender Ueberlappungsrand mit einer Breite gebildet wird, die mindestens dreimal grösser ist, als die Dicke der Elektrolytsperre, um laterale Diffusion der elektroaktiven Species durch den umlaufenden Rand zu verhindern.

2. Zelle nach Anspruch 1, bei welcher die Schicht (26) aus einem resilient flexiblen Blech aus einem im wesentlichen inerten Metall hergestellt und ein Halter (27) vorgesehen ist, um das Metallblech in dichter Verbindung mit der Membran (22) zu halten.

**3.** Zelle nach Anspruch 1, bei welcher die Schicht (26) eine Metallschicht ist, die bei den Betriebsbedingungen der Zelle im wesentlichen inert ist, wobei die Schicht einen Umfang besitzt, der von einer Aussenkante der Schicht gebildet ist und eine Oeffnung (29) besitzt, die von einer Innenkante der Schicht gebildet ist, wobei die Aussenkante der Schicht dicht mit einem Mantel (25) der Zelle (20) und die Innenkante der Schicht (26) dicht mit der Membran (22) verbunden ist, wobei der Mantel (25) für die gewählte elektroaktive Species im wesentlichen undurchlässig ist.

**4.** Zelle nach einem der Ansprüche 1 bis 3, bei der die mindestens eine Oeffnung (29) der Schicht (26) eine konzentrisch mit der Spürfläche (210) angeordnete Oeffnung ist.

**5.** Zelle nach einem der Ansprüche 1 bis 3, bei der die mindestens eine Oeffnung (29) der Schicht (26) eine Mehrzahl von Oeffnungen darstellt, die innerhalb des umlaufenden Randes angeordnet sind.

**6.** Zelle nach einem der Ansprüche 1 bis 5, bei der die Arbeitselektrode (21) die Anode darstellt und die Zelle (20) zur Bestimmung von elementarem Wasserstoff geeignet ist.

**7.** Verfahren zur elektroanalytischen Bestimmung der Konzentration einer gewählten elektroaktiven Species in einem fluiden ambienten Medium mittels einer amperometrischen Zelle mit Membranabschluss, wie in einem der Ansprüche 1 bis 6 beansprucht.

**8.** Verfahren nach Anspruch 7, bei dem die gewählte elektroaktive Species elementarer Wasserstoff ist.

**Revendications**

**1.** Cellule ampérométrique à membrane incorporée (20) destinée à être employée pour la détermination de la concentration d'une espèce électroactive d'intérêt dans un milieu ambiant; ladite cellule comprenant:

(A) une électrode de travail (21) ayant une zone de détection (210) s'inscrivant dans une périphérie extérieure essentiellement circulaire;

(B) un film (240) d'un électrolyte liquide recouvrant la zone de détection et se trouvant en contact électrolytique avec une contre-électrode (23), le film possédant une épaisseur sensiblement uniforme;

(C) une membrane (22) en polymère qui est sensiblement imperméable à l'électrolyte mais perméable à l'espèce électroactive, la membrane s'étendant, de manière à venir sensiblement s'y conformer, sur le dessus de la zone de détection et du film électrolytique qui s'y situe, la membrane ayant une épaisseur sensiblement uniforme;

(D) une barrière physique à l'infiltration

(D-1) comprenant une couche (26) d'un matériau solide sensiblement inerte qui est sensiblement imperméable à l'électrolyte liquide et à l'espèce électroactive;

(D-2) s'étendant entre le milieu ambiant et ladite membrane;

(D-3) disposée selon une configuration sensiblement parallèle à la membrane et en contact physique avec celle-ci;

(D-4) ayant au moins une ouverture (29) permettant à l'espèce électroactive d'accéder à une portion limitée de ladite membrane;

caractérisée en ce que,

ladite couche (26) s'étend vers l'intérieur au-delà de ladite périphérie de ladite zone de détection de sorte à former une marge circonférentielle de recouvrement ayant une longueur qui est au moins trois fois plus grande que l'épaisseur de ladite barrière électrolytique afin d'empêcher une diffusion latérale de ladite espèce électroactive au travers de ladite marge circonférentielle.

**2.** Cellule selon la revendication 1, dans laquelle la couche (26) est réalisée en une feuille élastiquement flexible en métal sensiblement inerte, et dans laquelle des moyens de fixation (27) sont prévus pour maintenir la feuille de métal en contact étanche avec la membrane (22).

**3.** Cellule selon la revendication 1, dans laquelle la couche (26) est une couche en un métal qui est sensiblement inerte aux conditions de fonctionnement de la cellule, la couche ayant une périphérie formée par le bord extérieur de la couche, et une ouverture (29) définie par un bord intérieur de la couche, le bord extérieur de la couche étant relié de manière étanche à une chemise (25) de la cellule (20), et le bord intérieur de la couche étant relié de manière étanche à la membrane (22), la chemise (25) étant sensiblement imperméable à l'espèce électroactive d'intérêt.

4. Cellule selon l'une quelconque des revendication 1 à 3, dans laquelle ladite au moins une ouverture (29) de la couche (26) est une ouverture unique disposée concentriquement à la zone de détection (210).

5. Cellule selon l'une quelconque des revendication 1 à 3, dans laquelle ladite au moins une ouverture (29) de la couche (26) est formée par une multitude d'ouvertures disposées à l'intérieur de la marge circonférentielle.

6. Cellule selon l'une quelconque des revendication 1 à 5, dans laquelle l'électrode de travail est l'anode, et dans laquelle la cellule est adaptée à la détermination d'hydrogène élémentaire.

7. Procédé de détermination électrogravimétrique de la concentration d'une espèce électroactive d'intérêt dans un milieu fluide ambiant au moyen d'une cellule ampérométrique à membrane incorporée telle que revendiquée dans l'une des revendications 1 à 6.

8. Procédé selon la revendication 7, dans lequel l'espèce électroactive d'intérêt est de l'hydrogène élémentaire.

Fig. 1

Fig. 2

14

Fig. 3

Fig. 4

Fig. 5